# EUROPEAN PATENT SPECIFICATION

(11) **EP 3 797 543 B1**
(45) Date of publication and mention of the grant of the patent: **30.11.2022**
(21) Application number: 19729101.6
(22) Date of filing: 22.05.2019
(51) Int. Cl.: H04W 36/00

(54) **METHODS FOR INDICATION OF RADIO ACCESS TECHNOLOGY**
VERFAHREN ZUR ANZEIGE VON FUNKZUGANGSTECHNOLOGIE
PROCÉDÉS D'INDICATION DE TECHNOLOGIE D'ACCÈS RADIO

(30) Priority: 23.05.2018 US 201862675450 P
(43) Date of publication of application: 31.03.2021
(73) Proprietor: TELEFONAKTIEBOLAGET LM ERICSSON (PUBL), 164 83 Stockholm (SE)
(72) Inventor: EKLÖF, Cecilia, 187 41 TÄBY (SE); SHI, Nianshan, 176 74 JÄRFÄLLA (SE)
(74) Representative: Ericsson
(86) International application number: PCT/SE2019/050469
(87) International publication number: WO 2019/226111

(56) References cited:
- EP-B1- 2 628 325
- US-A1- 2017 188 270
- US-B2- 8 964 691
- "3rd Generation Partnership Project; Technical Specification Group Services and System Aspects; Study on Circuit Switched (CS) domain services over evolved Packet Switched (PS) access; Stage 2 (Release 9)", 3GPP STANDARD; 3GPP TR 23.879, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.0, 1 March 2009 (2009-03-01), pages 1-60, XP050364079,
- HUAWEI ET AL: "Improve how CSFB UE return back to the former LTE PLMN", 3GPP DRAFT; 23272_CR0882R1_TEI11 SAES-CSFB_(REL-11)_S2-132798_2489_S2-13218 4_23272_REL11_CSFB UE RETURN BACK TO THE FORMER LTE PLMN ERI_V2_ALU, 3RD GENERATION PARTNERSHIP PROJECT (3GPP), MOBILE COMPET , vol. SA WG2, no. Valencia, Spain; 20130715 - 20130719 2 December 2013 (2013-12-02), XP050769045, Retrieved from the Internet: URL:http://www.3gpp.org/ftp/Meetings_3GPP_ SYNC/SA/SA/Docs/ [retrieved on 2013-12-02]
- MOTOROLA MOBILITY ET AL: "Solution for SRVCC handover to 3G", 3GPP DRAFT; S2-183834_5G-SRVCC_SOLUTION_V4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sanya, P.R. China; 20180416 - 20180420 10 April 2018 (2018-04-10), XP051438133, Retrieved from the Internet: URL:http://www.3gpp.org/ftp/tsg%5Fsa/WG2%5 FArch/TSGS2%5F127%5FSanya/Docs/ [retrieved on 2018-04-10]
- MEDIATEK INC: "SRVCC from 5GS to UTRAN CS - Return to NG-RAN", 3GPP DRAFT; R6-180062 5GS SRVCC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG6, no. Busan, Korea; 20180521 - 20180521 20 May 2018 (2018-05-20), XP051448179, Retrieved from the Internet: URL:http://www.3gpp.org/ftp/Meetings%5F3GP P%5FSYNC/RAN6/Docs/ [retrieved on 2018-05-20]

## Description

### TECHNICAL FIELD

The present invention relates to methods and network nodes. More specifically, it relates to an indication during SRVCC.

### BACKGROUND

There is an ongoing study in 3GPP for Single Radio Voice Call Continuity (SRVCC) from NR to 2G/3G. SRVCC exists for LTE and stands for Single Radio Voice Call Continuity where a packet switched voice call using IP Multimedia Subsystem (IMS) is handed over to a circuit switched voice call in 2G/3G. The assumption in the ongoing study for NR has been to reuse as much as possible from LTE SRVCC in NR SRVCC to 3G and if possible avoid impacts in the 3G networks.

When a user equipment (UE) has finished the voice call in 3G it should return as fast as possible to NR in order not to impact the end user experience with lower data rates in 3G. The assumption has been to reuse the existing Release with Redirect (RWR) mechanism, where the UE is instructed to go back to the other Radio Access Technology (RAT) in the Radio Resource Control (RRC) Connection Release message. The proposal is to use the RWR mechanism and perform a blind redirect to NR (i.e. no frequencies indicated in the RRC message) and let the UE find the NR cell based on implementation.

SRVCC from E-UTRAN to UTRAN works briefly as:
1. UE sends measurement reports to E-UTRAN. Based on the measurement, eNB decides to trigger an SRVCC handover by sending a Handover Required (Target ID, generic Source to Target Transparent Container, SRVCC HO indication) message to the source Mobile Management Entity (MME).
2. The MME communicates to Media Gateway (MGW) who communicates to the target Mobile-service Switching Controller (MSC) about the SRVCC;
3. Target MSC sends the Relocation Request/Handover Request message to the target RNS to perform SRVCC.

In the current RRC specification [1], the RWR is implemented by including the Redirection info in RRC Connection Release:

### 10.2.37 RRC CONNECTION RELEASE

This message is sent by UTRAN to release the RRC connection. The message also releases the signaling connection and all radio bearers between the UE and UTRAN.
RLC-SAP: UM
Logical channel: CCCH or DCCH
Direction: UTRAN→UE

| **Information Element/Group name** | **Need** | **Multi** | **Type and reference** | **Semantics description** | **Version** |
|---|---|---|---|---|---|
| Message Type | MP | | Message Type | | |

| **UE information elements** | | | | | |
|---|---|---|---|---|---|
| CHOICE identity type | *CV-CCCH* | | | | REL-5 |
| >U-RNTI | | | U-RNTI 10.3.3.47 | | |
| > Group identity | | 1 to <max URNT Igroup > | | | REL-5 |
| >>Group release information | MP | | Group release information 10.3.3.14o | | REL-5 |
| RRC transaction identifier | MP | | RRC transaction identifier 10.3.3.36 | | |
| Integrity check info | CV-*DCCH* | | Integrity check info 10.3.3.16 | Integrity check info is included if integrity protection is applied | |
| N308 | CH-*Cell_D CH* | | Integer(1.. 8) | | |
| Release cause | MP | | Release cause 10.3.3.32 | | |
| UE Mobility State Indicator | CV-*DCCH MD* | | Enumerated (High-mobilityDetected) | Absence of this IE implies that, according to [4] the UE shall consider itself being in the mobility state the UE has maintained in CELL DCH state or being not in high-mobility state when entering in Idle Mode, if applicable. | REL-7 |
| Extended Wait Time | OP | | Extended Wait Time 10.3.3.12a | | REL-10 |

| **Other information elements** | | | | | |
|---|---|---|---|---|---|
| Rplmn information | OP | | Rplmn information 10.3.8.15 | | |
| Redirection info | OP | | Redirection info 10.3.3.29 | | REL-6 |

| | **Condition** | | **Explanation** |
|---|---|---|---|
| *CCCH* | | This IE is mandatory present when CCCH is used and not needed otherwise. | |
| *DCCH* | | This IE is mandatory present when DCCH is used and not needed otherwise. | |
| *DCCH MD* | This IE is mandatory default when DCCH is used and not needed otherwise. | | |
| *Cell_DCH* | This IE is mandatory present when UE is in CELL_DCH state and not needed otherwise. | | |

and the redirection info contains the following information:

### 10.3.3.29 Redirection info

This IE is used to redirect the UE to another frequency or other system.

With the Release 6 version a list of cells may be provided to the UE, where cell selection shall be started.

| **Information Element/Group name** | **Need** | **Multi** | **Type and reference** | **Semantics description** | **Version** |
|---|---|---|---|---|---|
| CHOICE *Redirection Information* | MP | | | | |
| >Frequency info | | | Frequency info 10.3.6.36 | | |
| >Inter-RAT info | | | Inter-RAT info 10.3.7.25 | | |

The Inter-RAT info is used for redirection to other RAT and contains the following information:

### 10.3.7.25 Inter-RAT info Inter-RAT info defines the target system for redirected cell selection.

| **Information Element/Group name** | **Need** | **Multi** | **Type and reference** | **Semantic s descriptio n** | **Versio n** |
|---|---|---|---|---|---|
| Inter-RAT info | MP | | Enumerated (GSM | | |
| | | | , E-UTRA) | | REL-8 |
| GSM target cell info | *CV-GSM* | | GSM target cell info 10.3.8.4g | | REL-6 |
| E-UTRA target info | CV-E-*UTRA* | | E-UTRA target info 10.3.8.4L | | REL-8 |

| **Condition** | **Explanation** |
|---|---|
| *GSM* | This IE is optionally present if the IE "Inter-RAT info" is set to 'GSM' and not needed otherwise. |
| *E-UTRA* | This IE is mandatory present if the IE "Inter-RAT info" is set to 'E-UTRA' and not needed otherwise. |

There currently exist certain challenge(s). For example, as can be seen above there is currently no possibility to indicate NR as the target RAT at RWR. If E-UTRA is indicated, the target E-UTRA frequencies are mandatorily present. Thus, it is not possible to perform a blind RWR to LTE.

Additionally, there are at least two problems with reusing the current LTE SRVCC procedure for SRVCC from NR to 3G and using blind RWR for return to NR
- The behavior in the RNC will be different for RWR to LTE (where target frequencies are indicated in the release message) and RWR to NR where the proposal is to use blind redirection (i.e. no target frequencies specified). If the current LTE SRVCC procedure is reused the RNC doesn't know whether the UE comes from NR or LTE and cannot trigger different behavior.
- There is currently no possibility in the RRC message to perform a blind RWR to LTE and hence the existing signaling cannot be reused as it is.
Due to these reasons some impact due to SRVCC from NR to 3G is foreseen.
US 8 964 691 B2 (CHEN BONNIE [US]; GOOGLE TECHNOLOGY HOLDINGS LLC [US]) discloses a communication system that implements an inter-technology SRVCC handoff without the need for an SRVCC indicator.
EP 2 628 325 B1 (ERICSSON TELEFON AB L M [SE]) discloses a method and apparatus for identification of a serving GPRA support node of a mobile station.
US 2017/188270 A1 (SHAN CHANG HONG [CN] ET AL) discloses technology for transcoding avoidance during a SRVCC procedure.
"3rd Generation Partnership Project; Technical Specification Group Services and System Aspects; Study on Circuit Switched (CS) domain services over evolved Packet Switched (PS) access; Stage 2 (Release 9)"; 3GPP TR 23.879 no. V9.0.0, discloses MT CS call in active mode preparation phase procedure.
HUAWEI ET AL: "Improve how CSFB UE return back to the former LTE PLMN", vol. SA WG2, no. Valencia, Spain; 20130715 - 20130719 discloses a procedure for CS call request in E-UTRAN, call in GERAN/UTRAN.
MOTOROLA MOBILITY ET AL: "Solution for SRVCC handover to 3G", discloses 5G SRVCC procedure.

### SUMMARY

Certain aspects of the present disclosure and their embodiments may provide solutions to these or other challenges. For example, the proposed techniques make it possible for the radio network controller (RNC) to know that an incoming Single Radio Voice Call Continuity (SRVCC) UE comes from NR and the introduces the possibility to perform a blind Release with Redirect (RWR) back to NR
According to certain embodiments, a method by a first network node includes, during a SRVCC handover of a communication session of a wireless device from a first radio access technology (RAT) to a second RAT, transmitting, to a second network node, an indication that the wireless device has a SRVCC origin of the first RAT, wherein the first RAT is NR and the second RAT is 3G, and wherein: the first network node is a source radio access node and the second network node is a source core node, and the indication is included in a handover request message, or, the first network node is a target core node and the second network node is a target radio access node, and the indication is included in a handover request message.

According to certain embodiments, a first network node includes memory operable to store instructions and processing circuitry operable to execute the instructions to cause the first network node to, during a SRVCC handover of a communication session of a wireless device from a first RAT to a second RAT, transmitting, to a second network node, an indication that the wireless device has a SRVCC origin of the first RAT, wherein the first RAT is NR and the second RAT is 3G, and wherein: the first network node is a source radio access node and the second network node is a source core node, and the indication is included in a handover request message, or, the first network node is a target core node and the second network node is a target radio access node, and the indication is included in a handover request message.

According to certain embodiments, a method by a first network node includes, during a SRVCC handover of a communication session of a wireless device from a first RAT to a second RAT, receiving, from a second network node, an indication that the wireless device has a SRVCC origin of the first RAT, wherein the first RAT is NR and the second RAT is 3G, and wherein: the first network node is a source core node and the second network node is a source radio access node, and the indication is included in a handover request message, or, the first network node is a target radio access node and the second network node is a target core node, and the indication is included in a handover request message.

According to certain embodiments, a first network node includes memory operable to store instructions and processing circuitry operable to execute the instructions to cause the first network node to, during a SRVCC handover of a communication session of a wireless device from a first RAT to a second RAT, receiving, from a second network node, an indication that the wireless device has a SRVCC origin of the first RAT, wherein the first RAT is NR and the second RAT is 3G, and wherein: the first network node is a source core node and the second network node is a source radio access node, and the indication is included in a handover request message, or, the first network node is a target radio access node and the second network node is a target core node, and the indication is included in a handover request message.

Certain embodiments may provide one or more of the following technical advantages. For example, one technical advantage may be that certain embodiments provide a method for introducing a RWR from 3G to NR with minimal impacts to the specification.

Other advantages may be readily apparent to one having skill in the art. Certain embodiments may have none, some, or all of the recited advantages.

### BRIEF DESCRIPTION OF THE DRAWINGS

For a more complete understanding of the disclosed embodiments and their features and advantages, reference is now made to the following description, taken in conjunction with the accompanying drawings, in which:
FIGURE 1 illustrates signaling of a radio access technology (RAT) indication, according to certain embodiments;
FIGURE 2 illustrates an example wireless network for indicating a RAT, according to certain embodiments;
FIGURE 3 illustrates an example network node for indicating a RAT, according to certain embodiments;
FIGURE 4 illustrates an example wireless device for indicating a RAT, according to certain embodiments;
FIGURE 5 illustrate an example user equipment for indicating a RAT, according to certain embodiments;
FIGURE 6 illustrates a virtualization environment in which functions implemented by some embodiments may be virtualized, according to certain embodiments;
FIGURE 7 illustrates a telecommunication network connected via an intermediate network to a host computer, according to certain embodiments;
FIGURE 8 illustrates a generalized block diagram of a host computer communicating via a base station with a user equipment over a partially wireless connection, according to certain embodiments;
FIGURE 9 illustrates a method implemented in a communication system, according to one embodiment;
FIGURE 10 illustrates another method implemented in a communication system, according to one embodiment;
FIGURE 11 illustrates another method implemented in a communication system, according to one embodiment;
FIGURE 12 illustrates another method implemented in a communication system, according to one embodiment;
FIGURE 13 illustrates an example method by a network node for indicating a RAT, according to certain embodiments;
FIGURE 14 illustrates an exemplary virtual computing device for indicating a RAT, according to certain embodiments;
FIGURE 16 illustrates another example method by a network node for indicating a RAT, according to certain embodiments;

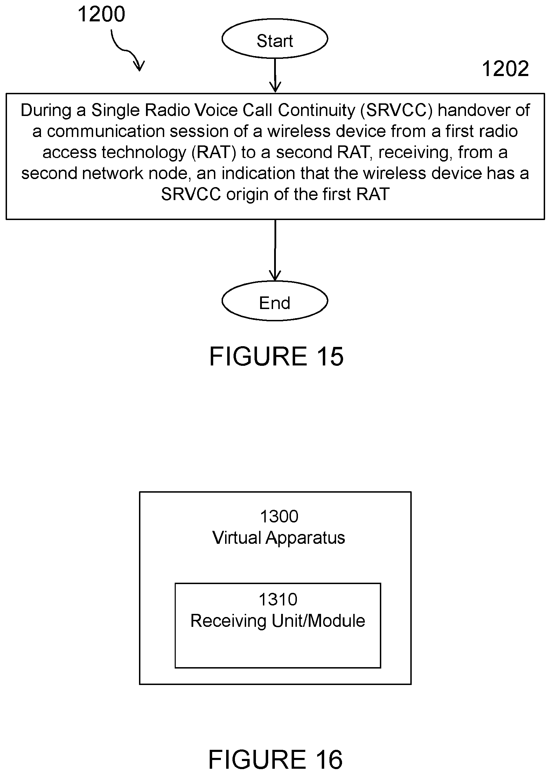

FIGURE 16 illustrates another exemplary virtual computing device for indicating a RAT, according to certain embodiments;

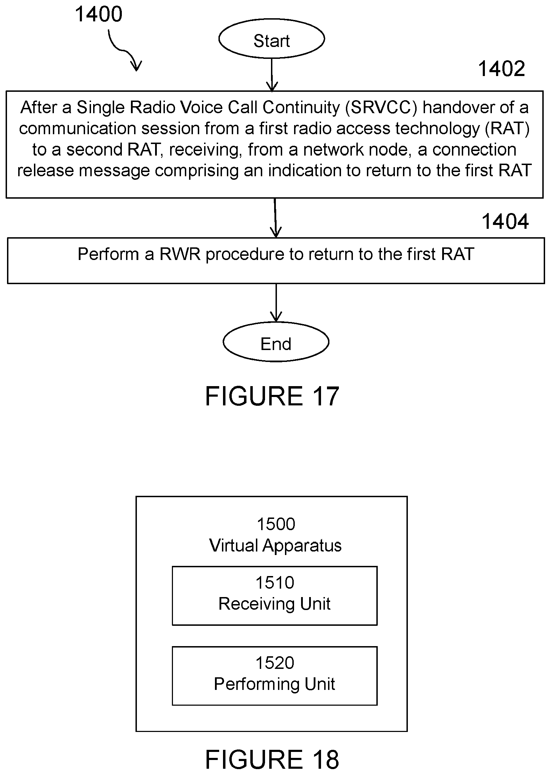

FIGURE 17 illustrates an example method by a wireless device for indicating a RAT, according to certain embodiments; and
FIGURE 18 illustrates an exemplary virtual computing device for indicating a RAT, according to certain embodiments.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

In some embodiments, a more general term "network node" may be used and may correspond to any type of radio network node or any network node, which communicates with a UE (directly or via another node) and/or with another network node. Examples of network nodes are NodeB, MeNB, SeNB, a network node belonging to MCG or SCG, base station (BS), multi-standard radio (MSR) radio node such as MSR BS, eNodeB, gNodeB, network controller, radio network controller (RNC), base station controller (BSC), relay, donor node controlling relay, base transceiver station (BTS), access point (AP), transmission points, transmission nodes, RRU, RRH, nodes in distributed antenna system (DAS), core network node (e.g. MSC, MME, etc), O&M, OSS, SON, positioning node (e.g. E-SMLC), MDT, test equipment (physical node or software), etc.

In some embodiments, the non-limiting term user equipment (UE) or wireless device may be used and may refer to any type of wireless device communicating with a network node and/or with another UE in a cellular or mobile communication system. Examples of UE are target device, device to device (D2D) UE, machine type UE or UE capable of machine to machine (M2M) communication, PDA, PAD, Tablet, mobile terminals, smart phone, laptop embedded equipped (LEE), laptop mounted equipment (LME), USB dongles, UE category M1, UE category M2, ProSe UE, V2V UE, V2X UE, etc.

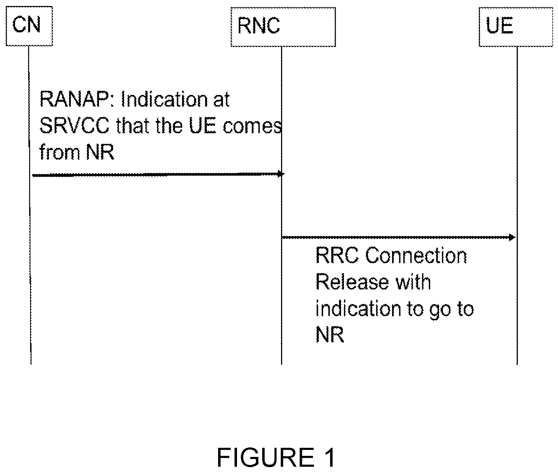

FIGURE 1 illustrates signaling of a RAT indication, according to certain embodiments. For example, at the SRVCC from NR to 3G, an indication may be sent to the RNC that the UE comes from NR. Such an indication could be sent either from the source RAN to the target RAN, for example, in the transparent container, according to a particular embodiment.

One example embodiment is to add an indication of the SRVCC originating RAT Type/RAN in Source RNC To Target RNC Transparent Container. In this solution, the change is on the target RAN-CN interface. If the target RAN of SRVCC is UTRAN, then it is on TS 25.413. Table 1 includes an example modification to TS 25.413 to add a new "SRVCC Origin Indication" IE, in order to inform which RAN node has initiated the SRVCC, so that the UE could be sent back to that RAN after the call is ended via RWR:

**Table 1**

| **IE/Group Name** | **Presence** | **Range** | **IE type and reference** | **Semantics description** | **Criticality** | **Assig ned Critica lity** |
|---|---|---|---|---|---|---|
| RRC Container | M | | OCTET STRING | | - | |
| Number of lu Instances | M | | INTEGER (1..2) | | - | |
| Relocation Type | M | | 9.2.1.23 | | - | |
| Chosen Integrity Protection Algorithm | O | | 9.2.1.13 | Indicates the integrity protection algorithm. | - | |
| Integrity Protection Key | O | | BIT STRING (SIZE(128)) | | - | |
| Chosen Encryption Algorithm | O | | 9.2.1.14 | Indicates the algorithm for ciphering of signalling data. | - | |
| Ciphering Key | O | | BIT STRING (SIZE(128)) | | - | |
| Chosen Encryption Algorithm | O | | 9.2.1.14 | Indicates the algorithm for ciphering of CS user data. | - | |
| Chosen Encryption Algorithm | O | | 9.2.1.14 | Indicates the algorithm for ciphering of PS user data. | - | |
| d-RNTI | C-ifUEnotinvol ved | | INTEGER (0..1048575 ) | | - | |
| Target Cell ID | C-ifUEinvolved | | INTEGER (0..2684354 55) | This information element identifies a cell uniquely within UTRAN and consists of RNC-ID and C-ID as defined in TS 25.401 [3] or *Cell Identity* IE as defined in TS 25.331 [10] if the target is a HNB TS 25.467 [55]. | - | |
| **RAB TrCH Mapping** | O | *1 to <maxnoof RABs>* | | | - | |
| >RAB ID | M | | 9.2.1.2 | | - | |
| **>RAB Subflow** | M | *1 to <maxRAB-Subflows>* | | The RAB Subflows shall be presented in an order that corresponds to the order in which the RBs are presented per RAB in the RRC container included in this IE. | - | |
| **>>Transport Channel IDs** | | | | | - | |
| >>>DCH ID | O | | INTEGER (0..255) | The DCH ID is the identifier of an active dedicated transport channel. It is unique for each active DCH among the active DCHs simultaneously allocated for the same UE. | - | |
| >>>DSCH ID | O | | INTEGER (0..255) | The DSCH ID is the identifier of an active downlink shared transport channel. It is unique for each DSCH among the active DSCHs simultaneously allocated for the same UE. | - | |
| >>>USCH ID | O | | INTEGER (0..255) | The USCH ID is the identifier of an active uplink shared transport channel. It is unique for each USCH among the active USCHs simultaneously allocated for the same UE. | - | |
| >>>HS-DSCH MAC-d Flow ID | O | | INTEGER (0..7) | The HS-DSCH MAC-d Flow ID is the identifier of an HS-DSCH MAC-d flow over lur. | YES | ignore |
| >>>E-DCH MAC-d Flow ID | O | | INTEGER (0..7) | The E-DCH MAC-d Flow ID is the identifier of an E-DCH MAC-d flow over lur. | YES | ignore |
| >CN Domain Indicator | M | | 9.2.1.5 | | YES | ignore |
| SRB TrCH Mapping | O | *1 to <maxnoofS RBs>* | | | GLOBAL | reject |
| >SRB ID | M | | INTEGER (1..32) | The SRB ID is the absolute value of the SRB. | - | |
| >DCH ID | O | | INTEGER (0..255) | The DCH ID is the identifier of an active dedicated transport channel over lur. It is unique for each active DCH among the active DCHs simultaneously allocated for the same UE. | - | |
| >DSCH ID | O | | INTEGER (0..255) | The DSCH ID is the identifier of an active downlink shared transport channel over lur. It is unique for each DSCH among the active DSCHs simultaneously allocated for the same UE. | - | |
| >USCH ID | O | | INTEGER (0..255) | The USCH ID is the identifier of an active uplink shared transport channel over lur. It is unique for each USCH among the active USCHs simultaneously allocated for the same UE. | - | |
| >HS-DSCH MAC-d Flow ID | O | | INTEGER (0..7) | The HS-DSCH MAC-d Flow ID is the identifier of an HS-DSCH MAC-d flow over lur. | YES | ignore |
| >E-DCH MAC-d Flow ID | O | | INTEGER (0..7) | The E-DCH MAC-d Flow ID is the identifier of an E-DCH MAC-d flow over lur. | YES | ignore |
| Cell Load Information Group | O | | 9.2.1.60 | For "Cell Load-Based Inter-System Handover". | YES | ignore |
| Trace Recording Session Information | O | | 9.2.1.66 | | YES | ignore |
| MBMS Linking Information | O | | ENUMERA TED (UE-has-joined-Multicast-Services, ...) | | YES | ignore |
| d-RNTI for No luCS UP | O | | INTEGER (0..1048575 ) | | YES | reject |
| UE History Information | O | | OCTET STRING | Defined in TS 36.413 [49]. | YES | ignore |
| Subscriber Profile ID for RAT/Frequency priority | O | | 9.2.1.86 | | YES | ignore |
| SRVCC Information | O | | 9.2.1.89 | Included only in case of intra-UMTS SRVCC. | YES | reject |
| PS RAB To Be Replaced | O | | RAB ID 9.2.1.2 | Included only in case of intra-UMTS SRVCC. | YES | reject |
| CSFB Information | O | | ENUMERA TED (CSFB, CSFB High Priority, ...) | | YES | ignore |
| IRAT Measurement Confiquration | O | | 9.2.1.96 | | YES | ignore |
| Management Based MDT Allowed | O | | 9.2.1.110 | | YES | ignore |
| Management Based MDT PLMN List | O | | MDT PLMN List 9.2.1.116 | | YES | ignore |
| Last E-UTRAN PLMN Identity | O | | 9.2.3.55 PLMN Identity | Indicates the E-UTRAN PLMN ID where the UE formerly requested CS Fallback to UTRAN. | YES | ignore |
| SRVCC Origin Indication | O | | ENUMERA TED(NG-RAN, LTE, ...) | Indicates which RAN initiated the SRVCC | YES | ignore |

According to 9.2.1.28, the *Source RNC to Target RNC Transparent Container* IE is an information element that is produced by the source RNC and is transmitted to the target RNC. In inter-system handovers to UTRAN, the IE is transmitted from the external relocation source to the target RNC. According to certain embodiments, this IE is transparent to the CN.

According to certain particular embodiments, such an indication may be sent from the source RAN to source CN, and forwarded from source CN to the target CN. The indication may then be forwarded by the target CN to the target RAN. In one example embodiment, the indication may be added in Handover Required in NGAP/S1AP for the source RAN to inform the source CN, and may also be added in Relocation Request/Handover Request for the target CN to inform the target RAN. In this solution, the impact is both on the source RAN-CN interface as well as the target RAN-CN interface.

According to certain other particular embodiments, such an indication could be sent from the target CN to the target RAN, for example, in the relocation or handover request message. In this case, the target CN figures out which RAT/RAN i8ndicated the SRVCC. One example embodiment is to add such an indication in Relocation Request / Handover Request. In this solution, the impact is on the target RAN-CN interface.

In the RRC message to the UE, the possibility to perform blind redirection to NR is introduced, e.g. by adding an NR RAT indication in the RRC Connection Release message. The frequencies may also be optionally included.

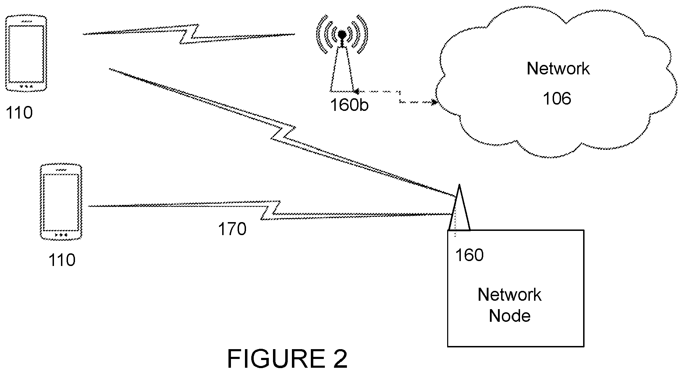

FIGURE 2 illustrates a wireless network, in accordance with some embodiments. Although the subject matter described herein may be implemented in any appropriate type of system using any suitable components, the embodiments disclosed herein are described in relation to a wireless network, such as the example wireless network illustrated in FIGURE 2. For simplicity, the wireless network of FIGURE 2 only depicts network 106, network nodes 160 and 160b, and WDs 110, 110b, and 110c. In practice, a wireless network may further include any additional elements suitable to support communication between wireless devices or between a wireless device and another communication device, such as a landline telephone, a service provider, or any other network node or end device. Of the illustrated components, network node 160 and wireless device (WD) 110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

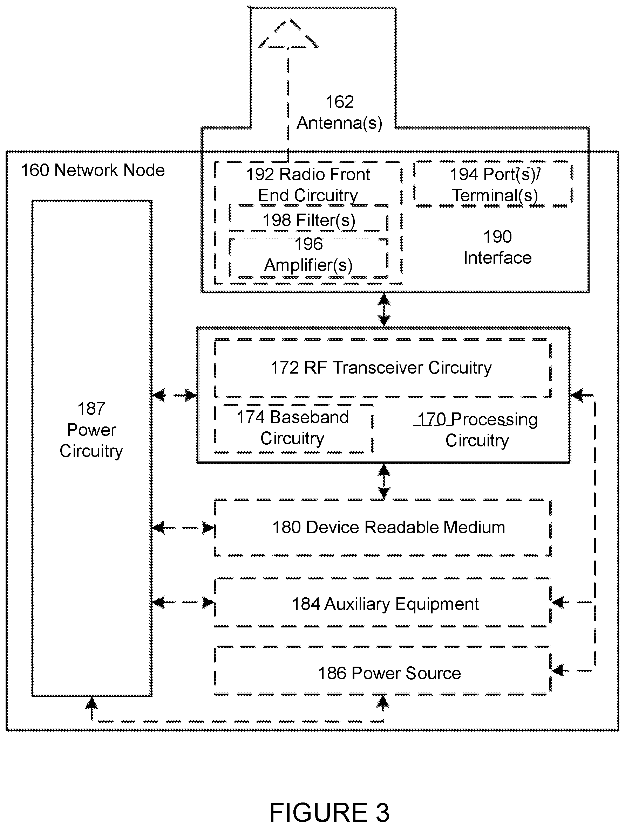

FIGURE 3 illustrates an example network node, according to certain embodiments. As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 2, network node 160 includes processing circuitry 170, device readable medium 180, interface 190, auxiliary equipment 184, power source 186, power circuitry 187, and antenna 162. Although network node 160 illustrated in the example wireless network of FIGURE 2 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., a NodeB component and a RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality. For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units.

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160 but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signalling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162. Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 190 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160. For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node 160 may include additional components beyond those shown in FIGURE 2 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

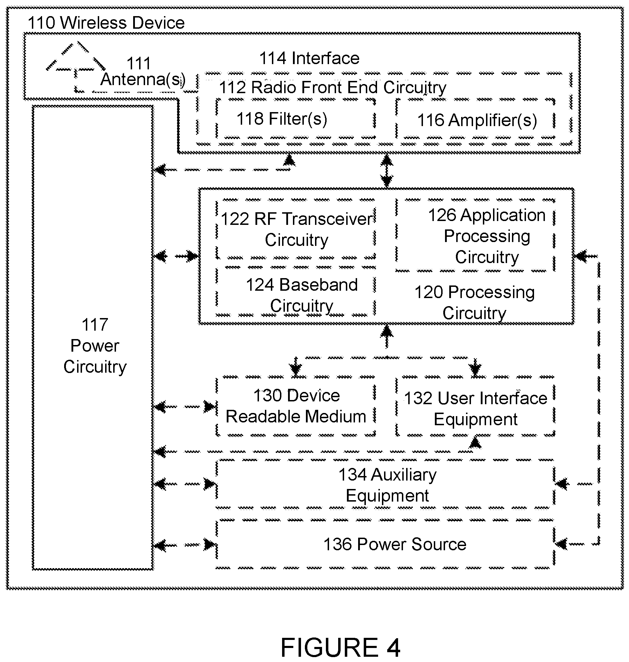

FIGURE 4 illustrates an example wireless device (WD), according to certain embodiments. As used herein, WD refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated in FIGURE 4, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated in FIGURE 4, interface 114 comprises radio front end circuitry 112 and antenna 111. Radio front end circuitry 112 comprise one or more filters 118 and amplifiers 116. Radio front end circuitry 114 is connected to antenna 111 and processing circuitry 120 and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114. Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated in FIGURE 4, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD 110 may comprise a SOC. In some embodiments, RF transceiver circuitry 122, baseband processing circuitry 124, and application processing circuitry 126 may be on separate chips or sets of chips. In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner. In any of those particular embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110 as a whole, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be considered to be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected). User interface equipment 132 may include input interfaces, devices and circuits, and output interfaces, devices and circuits. User interface equipment 132 is configured to allow input of information into WD 110 and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry. Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

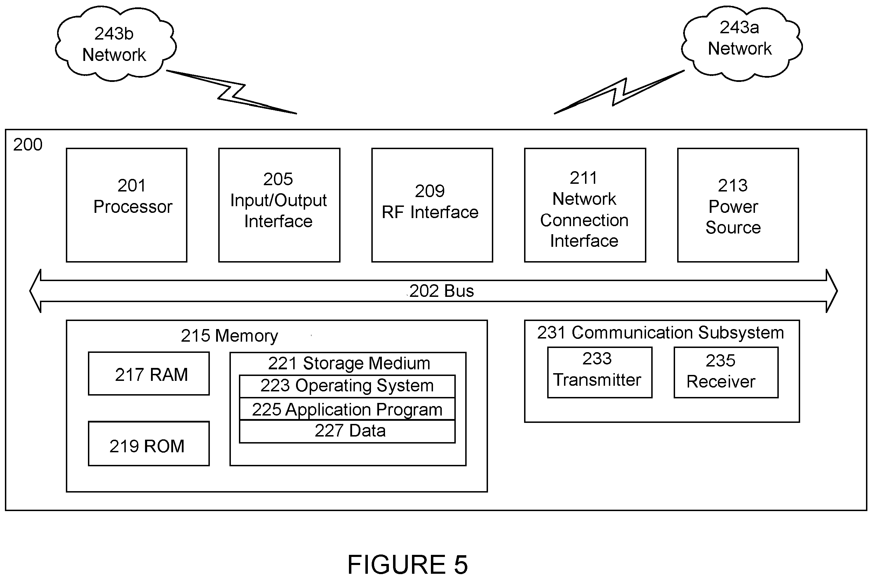

FIGURE 5 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 2200 may be any UE identified by the 3^{rd} Generation Partnership Project (3GPP), including a NB-IoT UE, a machine type communication (MTC) UE, and/or an enhanced MTC (eMTC) UE. UE 200, as illustrated in FIGURE 5, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although FIGURE 5 is a UE, the components discussed herein are equally applicable to a WD, and vice-versa.

In FIGURE 5, UE 200 includes processing circuitry 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 233, and/or any other component, or any combination thereof. Storage medium 221 includes operating system 223, application program 225, and data 227. In other embodiments, storage medium 221 may include other similar types of information. Certain UEs may utilize all of the components shown in FIGURE 5, or only a subset of the components. The level of integration between the components may vary from one UE to another UE. Further, certain UEs may contain multiple instances of a component, such as multiple processors, memories, transceivers, transmitters, receivers, etc.

In FIGURE 5, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205. An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof. UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIGURE 5, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory. Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to off-load data, or to upload data. An article of manufacture, such as one utilizing a communication system may be tangibly embodied in storage medium 221, which may comprise a device readable medium.

In FIGURE 5, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.2, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

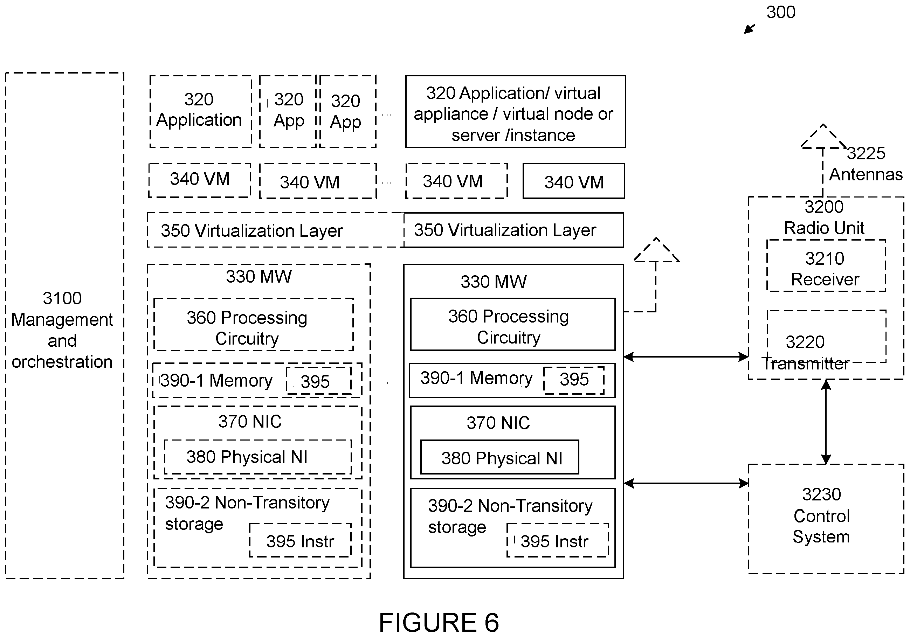

FIGURE 6 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in FIGURE 6, hardware 330 may be a standalone network node with generic or specific components. Hardware 330 may comprise antenna 3225 and may implement some functions via virtualization. Alternatively, hardware 330 may be part of a larger cluster of hardware (e.g. such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in FIGURE 6.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signaling can be affected with the use of control system 3230 which may alternatively be used for communication between the hardware nodes 330 and radio units 3200.

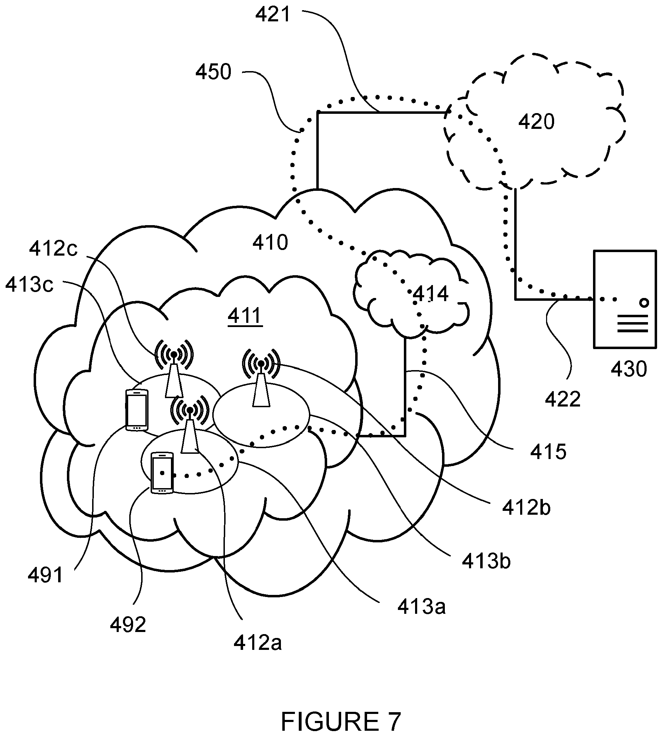

FIGURE 7 illustrates a telecommunication network connected via an intermediate network to a host computer in accordance with some embodiments. With reference to FIGURE 7, in accordance with an embodiment, a communication system includes telecommunication network 410, such as a 3GPP-type cellular network, which comprises access network 411, such as a radio access network, and core network 414. Access network 411 comprises a plurality of base stations 412a, 412b, 412c, such as NBs, eNBs, gNBs or other types of wireless access points, each defining a corresponding coverage area 413a, 413b, 413c. Each base station 412a, 412b, 412c is connectable to core network 414 over a wired or wireless connection 415. A first UE 491 located in coverage area 413c is configured to wirelessly connect to, or be paged by, the corresponding base station 412c. A second UE 492 in coverage area 413a is wirelessly connectable to the corresponding base station 412a. While a plurality of UEs 491, 492 are illustrated in this example, the disclosed embodiments are equally applicable to a situation where a sole UE is in the coverage area or where a sole UE is connecting to the corresponding base station 412.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of FIGURE 7 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, base station 412 may not or need not be informed about the past routing of an incoming downlink communication with data originating from host computer 430 to be forwarded (e.g., handed over) to a connected UE 491. Similarly, base station 412 need not be aware of the future routing of an outgoing uplink communication originating from the UE 491 towards the host computer 430.

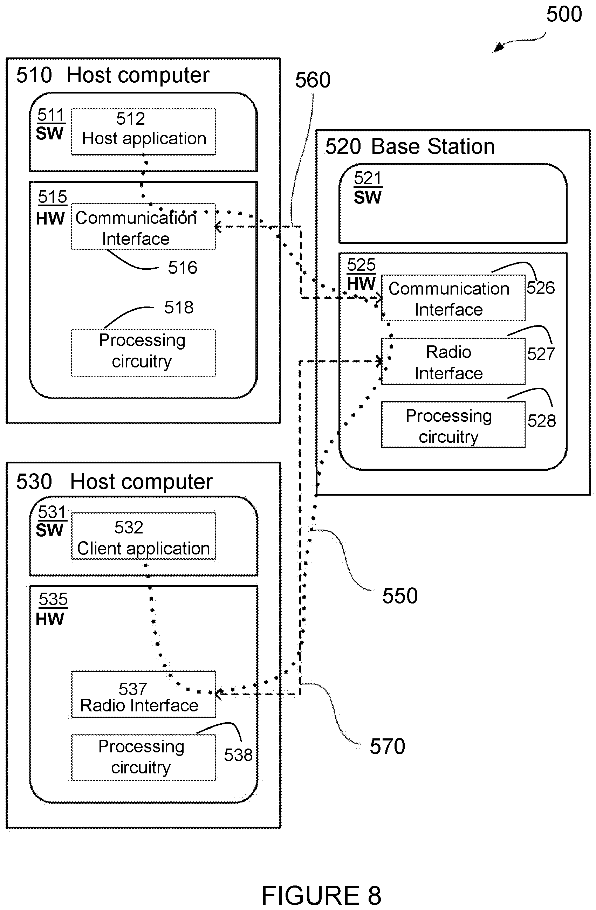

FIGURE 8 illustrates a host computer communicating via a base station with a user equipment over a partially wireless connection in accordance with some embodiments. Example implementations, in accordance with an embodiment, of the UE, base station and host computer discussed in the preceding paragraphs will now be described with reference to FIGURE 8. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. In providing the service to the remote user, host application 512 may provide user data which is transmitted using OTT connection 550.

Communication system 500 further includes base station 520 provided in a telecommunication system and comprising hardware 525 enabling it to communicate with host computer 510 and with UE 530. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in Figure 18) served by base station 520. Communication interface 526 may be configured to facilitate connection 560 to host computer 510. Connection 560 may be direct or it may pass through a core network (not shown in Figure 18) of the telecommunication system and/or through one or more intermediate networks outside the telecommunication system. In the embodiment shown, hardware 525 of base station 520 further includes processing circuitry 528, which may comprise one or more programmable processors, application-specific integrated circuits, field programmable gate arrays or combinations of these (not shown) adapted to execute instructions. Base station 520 further has software 521 stored internally or accessible via an external connection.

Communication system 500 further includes UE 530 already referred to. Its hardware 535 may include radio interface 537 configured to set up and maintain wireless connection 570 with a base station serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, base station 520 and UE 530 illustrated in FIGURE 8 may be similar or identical to host computer 430, one of base stations 412a, 412b, 412c and one of UEs 491, 492 of Figure 17, respectively. This is to say, the inner workings of these entities may be as shown in FIGURE 8 and independently, the surrounding network topology may be that of FIGURE 8.

In FIGURE 8, OTT connection 550 has been drawn abstractly to illustrate the communication between host computer 510 and UE 530 via base station 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., on the basis of load balancing consideration or reconfiguration of the network).

Wireless connection 570 between UE 530 and base station 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may improve the data rate, latency, and/or power consumption and thereby provide benefits such as reduced user waiting time, relaxed restriction on file size, better responsiveness, and/or extended battery lifetime.

A measurement procedure may be provided for the purpose of monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above or supplying values of other physical quantities from which software 511, 531 may compute or estimate the monitored quantities. The reconfiguring of OTT connection 550 may include message format, retransmission settings, preferred routing etc.; the reconfiguring need not affect base station 520, and it may be unknown or imperceptible to base station 520. Such procedures and functionalities may be known and practiced in the art. In certain embodiments, measurements may involve proprietary UE signaling facilitating host computer 510's measurements of throughput, propagation times, latency and the like. The measurements may be implemented in that software 511 and 531 causes messages to be transmitted, in particular empty or 'dummy' messages, using OTT connection 550 while it monitors propagation times, errors etc.

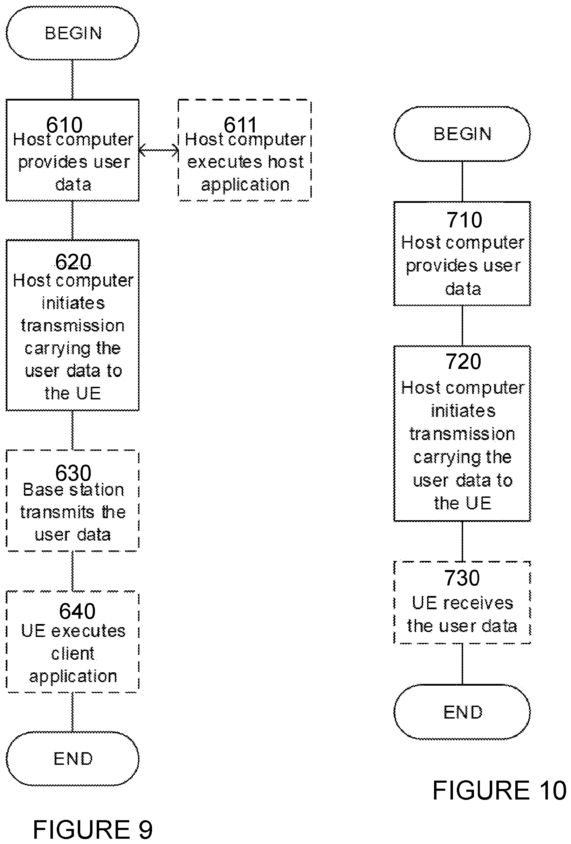

FIGURE 9 is a flowchart illustrating a method implemented in a communication system, in accordance with one embodiment. The communication system includes a host computer, a base station and a UE which may be those described with reference to FIGURES 7 and 8. For simplicity of the present disclosure, only drawing references to FIGURE 9 will be included in this section. In step 610, the host computer provides user data. In substep 611 (which may be optional) of step 610, the host computer provides the user data by executing a host application. In step 620, the host computer initiates a transmission carrying the user data to the UE. In step 630 (which may be optional), the base station transmits to the UE the user data which was carried in the transmission that the host computer initiated, in accordance with the teachings of the embodiments described throughout this disclosure. In step 640 (which may also be optional), the UE executes a client application associated with the host application executed by the host computer.

FIGURE 10 is a flowchart illustrating a method implemented in a communication system, in accordance with one embodiment. The communication system includes a host computer, a base station and a UE which may be those described with reference to FIGURES 7 and 8. For simplicity of the present disclosure, only drawing references to FIGURE 10 will be included in this section. In step 710 of the method, the host computer provides user data. In an optional substep (not shown) the host computer provides the user data by executing a host application. In step 720, the host computer initiates a transmission carrying the user data to the UE. The transmission may pass via the base station, in accordance with the teachings of the embodiments described throughout this disclosure. In step 730 (which may be optional), the UE receives the user data carried in the transmission.

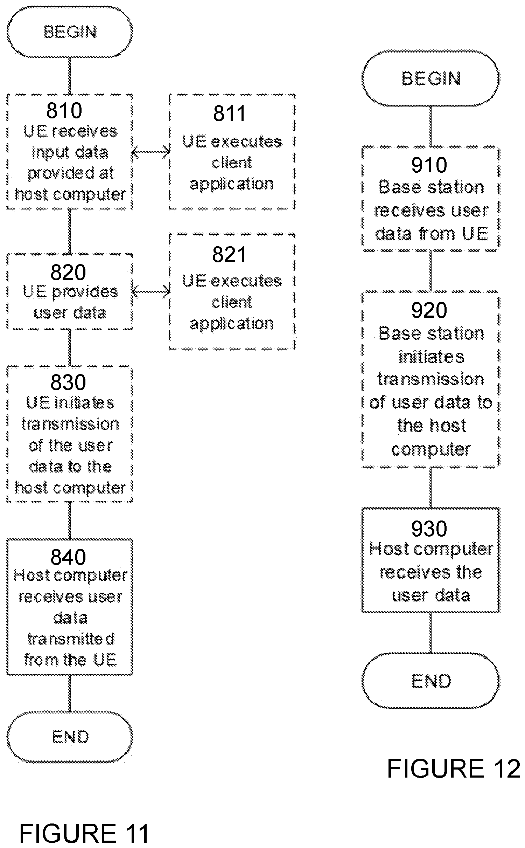

FIGURE 11 is a flowchart illustrating a method implemented in a communication system, in accordance with one embodiment. The communication system includes a host computer, a base station and a UE which may be those described with reference to FIGURES 7 and 8. For simplicity of the present disclosure, only drawing references to FIGURE 11 will be included in this section. In step 810 (which may be optional), the UE receives input data provided by the host computer. Additionally or alternatively, in step 820, the UE provides user data. In substep 821 (which may be optional) of step 820, the UE provides the user data by executing a client application. In substep 811 (which may be optional) of step 810, the UE executes a client application which provides the user data in reaction to the received input data provided by the host computer. In providing the user data, the executed client application may further consider user input received from the user. Regardless of the specific manner in which the user data was provided, the UE initiates, in substep 830 (which may be optional), transmission of the user data to the host computer. In step 840 of the method, the host computer receives the user data transmitted from the UE, in accordance with the teachings of the embodiments described throughout this disclosure.

FIGURE 12 is a flowchart illustrating a method implemented in a communication system, in accordance with one embodiment. The communication system includes a host computer, a base station and a UE which may be those described with reference to FIGURES 7 and 8. For simplicity of the present disclosure, only drawing references to FIGURE 12 will be included in this section. In step 910 (which may be optional), in accordance with the teachings of the embodiments described throughout this disclosure, the base station receives user data from the UE. In step 920 (which may be optional), the base station initiates transmission of the received user data to the host computer. In step 930 (which may be optional), the host computer receives the user data carried in the transmission initiated by the base station.

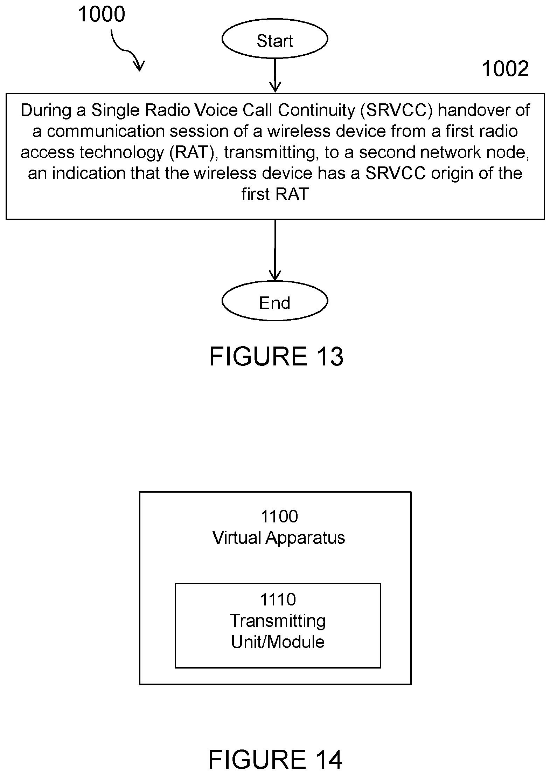

FIGURE 13 depicts a method 1000 by a first network node 160 for indicating a RAT, according to certain embodiments. At step 1202, during a SRVCC handover of a communication session of a wireless device 110 from a first RAT to a second RAT, a first network node 160 transmits, to a second network node 160, an indication that the wireless device 110 has a SRVCC origin of the first RAT.

In a particular embodiment, the first RAT may be NR and the second RAT may be 3G.

In a particular embodiment, the first network node 160 may be a source network node and the second network node 160 may be a target network node. The indication may be included in a source radio network controller (RNC) to target RNC transparent container.

In a particular embodiment, the first network node 160 may be a source radio access node and the second network node 160 may be a source core node. The indication may be included in a handover request message.

In a particular embodiment, the first network node 160 may be a target core node and the second network node 160 may be a target radio access node. The indication may be included in a handover request message.

In a particular embodiment, the first RAT may be a source RAT and the second RAT may be a target RAT.

In a particular embodiment, the first network node 160 may receive a measurement report from the wireless device 110 operating using the first RAT and, based on the measurement report, initiate the SRVCC handover to the second RAT.

FIGURE 14 illustrates a schematic block diagram of a virtual apparatus 1100 in a wireless network (for example, the wireless network shown in FIGURE 2). The apparatus may be implemented in a wireless device or network node (e.g., wireless device 110 or network node 160 shown in FIGURE 2). Apparatus 1100 is operable to carry out the example method described with reference to FIGURE 13 and possibly any other processes or methods disclosed herein. It is also to be understood that the method of FIGURE 13 is not necessarily carried out solely by apparatus 1100. At least some operations of the method can be performed by one or more other entities.

Virtual Apparatus 1100 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause transmitting unit/module 1110 and any other suitable units of apparatus 1100 to perform corresponding functions according one or more embodiments of the present disclosure.

According to certain embodiments, transmitting unit/module 1110 may perform certain of the transmitting functions of the apparatus 1100. For example, during a SRVCC handover of a communication session of a wireless device from a first RAT to a second RAT, transmitting unit/module 1110 may transmit an indication that the wireless device has a SRVCC origin of the first RAT.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

FIGURE 15 depicts a method 1200 by a first network node 160 for indicating a RAT, according to certain embodiments. At step 1202, during a SRVCC handover of a communication session of a wireless device 110 from a first RAT to a second RAT, a first network node 160 receives, from a second network node, an indication that the wireless device has a SRVCC origin of the first RAT.

In a particular embodiment, the first RAT is NR and the second RAT is 3G.

In a particular embodiment, the first network node 160 may be a target network node and the second network node may be a source network node. The indication may be included in a source radio network controller (RNC) to target RNC transparent container.

In a particular embodiment, the first network node 160 may be a source core node and the second network node may be a source radio access node. The indication may be included in a handover request message. In a particular embodiment, the first network node 160 may forward the indication to a target core node.

In a particular embodiment, the first network node 160 may be a target radio access node and the second network node 160 may be a target core node. The indication may be included in a handover request message.

In a particular embodiment, the first RAT may be a source RAT and the second RAT may be a target RAT.

In a particular embodiment, the first network node 160 transmits, to the wireless device 110, a connection release message comprising an indication to return to the first RAT.

FIGURE 16 illustrates a schematic block diagram of a virtual apparatus 1300 in a wireless network (for example, the wireless network shown in FIGURE 2). The apparatus may be implemented in a wireless device or network node (e.g., wireless device 110 or network node 160 shown in FIGURE 2). Apparatus 1300 is operable to carry out the example method described with reference to FIGURE 15 and possibly any other processes or methods disclosed herein. It is also to be understood that the method of FIGURE 15 is not necessarily carried out solely by apparatus 1300. At least some operations of the method can be performed by one or more other entities.

Virtual Apparatus 1300 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause receiving unit/module 1310 and any other suitable units of apparatus 1300 to perform corresponding functions according one or more embodiments of the present disclosure.

According to certain embodiments, receiving unit/module 1310 may perform certain of the receiving functions of the apparatus 1300. For example, during a SRVCC handover of a communication session of a wireless device from a first RAT to a second RAT, receiving unit/module 1310 may receive an indication from a second network node 160 that the wireless device 110 has a SRVCC origin of the first RAT.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

FIGURE 17 depicts a method 1400 by a wireless device 110 for receiving an indication of a RAT, according to certain embodiments. In a particular embodiment, the wireless device is a UE.

The method may begin at step 1402 when, after a SRVCC handover of a communication session from a first RAT to a second RAT, the wireless device 110 receives, from a network node 160, a connection release message comprising an indication to return to the first RAT. At step 1604, the wireless device 110 performs a RWR procedure to return to the first RAT.

In a particular embodiment, the first RAT may be NR and the second RAT may be 3G.

In a particular embodiment, the first RAT may be a source RAT and the second RAT may be a target RAT.

In a particular embodiment, the connection release message may be a radio resource control connection release message.

In a particular embodiment, the connection release message may not include a target frequency for the first RAT and the release with RWR procedure is a blind release with RWR procedure.

In a particular embodiment, the connection release message may include a target frequency for the first RAT and the release with RWR procedure may be performed for the target frequency.

FIGURE 18 illustrates a schematic block diagram of a virtual apparatus 1500 in a wireless network (for example, the wireless network shown in FIGURE 2). The apparatus may be implemented in a wireless device or network node (e.g., wireless device 110 or network node 160 shown in FIGURE 2). Apparatus 1500 is operable to carry out the example method described with reference to FIGURE 17 and possibly any other processes or methods disclosed herein. It is also to be understood that the method of FIGURE 17 is not necessarily carried out solely by apparatus 1500. At least some operations of the method can be performed by one or more other entities.

Virtual Apparatus 1500 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause receiving unit/module 1510, performing module 1520, and any other suitable units of apparatus 1500 to perform corresponding functions according one or more embodiments of the present disclosure.

According to certain embodiments, receiving unit/module 1510 may perform certain of the receiving functions of the apparatus 1500. For example, after a SRVCC handover of a communication session from a first RAT to a second RAT, receiving unit/module 1510 may receive, from a network node 160, a connection release message comprising an indication to return to the first RAT.

Performing module 1520 may perform certain of the performing functions of apparatus 1500. For example, performing unit/module 1520 may perform a RWR procedure to return to the first RAT.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).
- 1x RTT: CDMA2000 1x Radio Transmission Technology
- 3GPP: 3rd Generation Partnership Project
- 5G: 5th Generation
- 5GS: 5G System
- 5QI: 5G QoS Identifier
- ABS: Almost Blank Subframe
- AN: Access Network
- AN: Access Node
- ARQ: Automatic Repeat Request
- AS: Access Stratum
- AWGN: Additive White Gaussian Noise
- BCCH: Broadcast Control Channel
- BCH: Broadcast Channel
- CA: Carrier Aggregation
- CC: Carrier Component
- CCCH SDU: Common Control Channel SDU
- CDMA: Code Division Multiplexing Access
- CGI: Cell Global Identifier
- CIR: Channel Impulse Response
- CN: Core Network
- CP: Cyclic Prefix
- CPICH: Common Pilot Channel
- CPICH Ec/No: CPICH Received energy per chip divided by the power density in the band
- CQI: Channel Quality information
- C-RNTI: Cell RNTI
- CSI: Channel State Information
- DCCH: Dedicated Control Channel
- DL: Downlink
- DM: Demodulation
- DMRS: Demodulation Reference Signal
- DRX: Discontinuous Reception
- DTX: Discontinuous Transmission
- DTCH: Dedicated Traffic Channel
- DUT: Device Under Test
- E-CID: Enhanced Cell-ID (positioning method)
- E-SMLC: Evolved-Serving Mobile Location Centre
- ECGI: Evolved CGI
- eNB: E-UTRAN NodeB
- ePDCCH: enhanced Physical Downlink Control Channel
- EPS: Evolved Packet System
- E-SMLC: evolved Serving Mobile Location Center
- E-UTRA: Evolved UTRA
- E-UTRAN: Evolved Universal Terrestrial Radio Access Network
- FDD: Frequency Division Duplex
- FFS: For Further Study
- GERAN: GSM EDGE Radio Access Network
- gNB: gNode B (a base station in NR; a Node B supporting NR and connectivity to NGC)
- GNSS: Global Navigation Satellite System
- GSM: Global System for Mobile communication
- HARQ: Hybrid Automatic Repeat Request
- HO: Handover
- HSPA: High Speed Packet Access
- HRPD: High Rate Packet Data
- LOS: Line of Sight
- LPP: LTE Positioning Protocol
- LTE: Long-Term Evolution
- MAC: Medium Access Control
- MBMS: Multimedia Broadcast Multicast Services
- MBSFN: Multimedia Broadcast multicast service Single Frequency Network
- MBSFN ABS: MBSFN Almost Blank Subframe
- MDT: Minimization of Drive Tests
- MIB: Master Information Block
- MME: Mobility Management Entity
- MSC: Mobile Switching Center
- NGC: Next Generation Core
- NPDCCH: Narrowband Physical Downlink Control Channel
- NR: New Radio
- OCNG: OFDMA Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- PCell: Primary Cell
- PCFICH: Physical Control Format Indicator Channel
- PDCCH: Physical Downlink Control Channel
- PDP: Profile Delay Profile
- PDSCH: Physical Downlink Shared Channel
- PGW: Packet Gateway
- PHICH: Physical Hybrid-ARQ Indicator Channel
- PLMN: Public Land Mobile Network
- PMI: Precoder Matrix Indicator
- PRACH: Physical Random Access Channel
- PRS: Positioning Reference Signal
- PS: Packet Switched
- PSS: Primary Synchronization Signal
- PUCCH: Physical Uplink Control Channel
- PUSCH: Physical Uplink Shared Channel
- RACH: Random Access Channel
- QAM: Quadrature Amplitude Modulation
- RAB: Radio Access Bearer
- RAN: Radio Access Network
- RANAP: Radio Access Network Application Part
- RAT: Radio Access Technology
- RLM: Radio Link Management
- RNC: Radio Network Controller
- RNTI: Radio Network Temporary Identifier
- RRC: Radio Resource Control
- RRM: Radio Resource Management
- RS: Reference Signal
- RSCP: Received Signal Code Power
- RSRP: Reference Symbol Received Power OR Reference Signal Received Power
- RSRQ: Reference Signal Received Quality OR Reference Symbol Received Quality
- RSSI: Received Signal Strength Indicator
- RSTD: Reference Signal Time Difference
- RWR: Release with Redirect
- SCH: Synchronization Channel
- SCell: Secondary Cell
- SDU: Service Data Unit
- SFN: System Frame Number
- SGW: Serving Gateway
- SI: System Information
- SIB: System Information Block
- SNR: Signal to Noise Ratio
- S-NSSAI: Single Network Slice Selection Assistance Information
- SON: Self Optimized Network
- SS: Synchronization Signal
- SSS: Secondary Synchronization Signal
- TDD: Time Division Duplex
- TDOA: Time Difference of Arrival
- TOA: Time of Arrival
- TSS: Tertiary Synchronization Signal
- TTI: Transmission Time Interval
- UE: User Equipment
- UL: Uplink
- UMTS: Universal Mobile Telecommunication System
- USIM: Universal Subscriber Identity Module
- UTDOA: Uplink Time Difference of Arrival
- UTRA: Universal Terrestrial Radio Access
- UTRAN: Universal Terrestrial Radio Access Network
- WCDMA: Wide CDMA
- WLAN: Wide Local Area Network

## Claims

1. A method (1000) by a first network node (160) comprising:
during a Single Radio Voice Call Continuity, SRVCC, handover of a communication session of a wireless device (110) from a first radio access technology, RAT, to a second RAT, transmitting, to a second network node (160), an indication that the wireless device (110) has a SRVCC origin of the first RAT, wherein the first RAT is NR and the second RAT is 3G, and wherein:
the first network node (160) is a source radio access node and the second network node (160) is a source core node, and the indication is included in a handover request message,
or
the first network node (160) is a target core node and the second network node (160) is a target radio access node, and the indication is included in a handover request message.

2. The method (1000) of Claim 1, wherein:
the first RAT is a source RAT, and
the second RAT is a target RAT.

3. The method (1000) of Claim 1, further comprising
receiving a measurement report from the wireless device (110) operating using the first RAT; and
based on the measurement report, initiating the SRVCC handover to the second RAT.

4. A first network node (160) comprising:
memory (180) operable to store instructions; and
processing circuitry (170) operable to execute the instructions to cause the first network node (160) to:
during a Single Radio Voice Call Continuity, SRVCC, handover of a communication session of a wireless device (110) from a first radio access technology, RAT, to a second RAT, transmitting, to a second network node (160), an indication that the wireless device (110) has a SRVCC origin of the first RAT, wherein the first RAT is NR and the second RAT is 3G, and wherein:
the first network node (160) is a source radio access node and the second network node (160) is a source core node, and the indication is included in a handover request message,
or
the first network node (160) is a target core node and the second network node (160) is a target radio access node, and the indication is included in a handover request message.

5. The first network node (160) of Claim 4, wherein:
the first RAT is a source RAT, and
the second RAT is a target RAT.

6. The first network node (160) of Claim 4, wherein the processing circuitry (170) is operable to execute the instructions to cause the first network node (160) to:
receive a measurement report from the wireless device (110) operating using the first RAT; and
based on the measurement report, initiate the SRVCC handover to the second RAT.

7. A method (1200) by a first network node (160) comprising:
during a Single Radio Voice Call Continuity, SRVCC, handover of a communication session of a wireless device (110) from a first radio access technology, RAT, to a second RAT, receiving, from a second network node (160), an indication that the wireless device (110) has a SRVCC origin of the first RAT, wherein the first RAT is NR and the second RAT is 3G, and wherein:
the first network node (160) is a source core node and the second network node (160) is a source radio access node, and the indication is included in a handover request message
or,
the first network node (160) is a target radio access node and the second network node (160) is a target core node, and the indication is included in a handover request message.

8. The method (1200) of Claim 7, further comprising:
forwarding the indication to a target core node, if the first network node (160) is a source core node and the second network node (160) is a source radio access node, and the indication is included in a handover request message.

9. The method (1200) of Claim 7, wherein:
the first RAT is a source RAT, and
the second RAT is a target RAT.

10. The method (1200) of Claim 7, further comprising:
transmitting, to the wireless device (110), a connection release message comprising an indication to return to the first RAT.

11. A first network node (160) comprising:
memory (180) operable to store instructions; and
processing circuitry (170) operable to execute the instructions to cause the first network node (160) to:
during a Single Radio Voice Call Continuity, SRVCC, handover of a communication session of a wireless device (110) from a first radio access technology, RAT, to a second RAT, receive, from a second network node (160), an indication that the wireless device (110) has a SRVCC origin of the first RAT, wherein the first RAT is NR and the second RAT is 3G, and wherein:
the first network node (160) is a source core node and the second network node (160) is a source radio access node, and the indication is included in a handover request message
or,
the first network node (160) is a target radio access node and the second network node (160) is a target core node, and the indication is included in a handover request message.

12. The first network node (160) of Claim 11, further comprising:
forwarding the indication to a target core node, if the first network node (160) is a source core node and the second network node (160) is a source radio access node, and the indication is included in a handover request message.

13. The first network node (160) of Claim 11, wherein:
the first RAT is a source RAT, and
the second RAT is a target RAT.

14. The first network node (160) of Claim 11, wherein the processing circuitry (170) is operable to execute the instructions to cause the first network node (160) to:
transmit, to the wireless device (110), a connection release message comprising an indication to return to the first RAT.

## Patentansprüche

1. Verfahren (1000) durch einen ersten Netzwerkknoten (160), umfassend:
Senden während eines Einzelfunk-Sprachverbindungskontinuitäts-,SRVCC-,Handover einer Kommunikation der drahtlosen Vorrichtung (110) von einer ersten Funkzugangstechnologie, RAT, an eine zweite RAT einer Angabe, dass eine drahtlose Vorrichtung (110) einen SRVCC-Ursprung der ersten RAT hat, an einen zweiten Netzwerkknoten (160), wobei die erste RAT NR ist, und die zweite RAT 3G ist, und wobei:
der erste Netzwerkknoten (160) ein Quell-Funkzugangsknoten ist, und der zweite Netzwerkknoten (160) einen Quell-Kernknoten ist, und die Angabe in einer Handover-Anforderungsnachricht enthalten ist, oder
der erste Netzwerkknoten (160) ein Ziel-Kernknoten ist, und der zweite Netzwerkknoten (160) ein Ziel-Funkzugangsknoten ist, und die Angabe in einer Handover-Anforderungsnachricht enthalten ist.

2. Verfahren (1000) nach Anspruch 1, wobei:
die erste RAT eine Quell-RAT ist, und
der zweite RAT eine Ziel-RAT ist.

3. Verfahren (1000) nach Anspruch 1, ferner umfassend:
Empfangen eines Messberichts von der drahtlosen Vorrichtung (110), die unter Verwendung der ersten RAT funktioniert; und
Initiieren des SRVCC-Handover an die zweite RAT basierend auf dem Messbericht.

4. Erster Netzwerkknoten (160), umfassend:
einen Speicher (180), der zum Speichern von Anweisungen ausgelegt ist;
eine Verarbeitungsschaltungsanordnung (170), die zum Ausführen der Anweisungen ausgelegt ist, um den ersten Netzwerkknoten (160) zu veranlassen zum:
Senden während eines Einzelfunk-Sprachverbindungskontinuitäts-,SRVCC-,Handover einer Kommunikation der drahtlosen Vorrichtung (110) von einer ersten Funkzugangstechnologie, RAT, an eine zweite RAT einer Angabe, dass eine drahtlose Vorrichtung (110) einen SRVCC-Ursprung der ersten RAT hat, an einen zweiten Netzwerkknoten (160), wobei die erste RAT NR ist, und die zweite RAT 3G ist, und wobei:
der erste Netzwerkknoten (160) ein Quell-Funkzugangsknoten ist, und der zweite Netzwerkknoten (160) einen Quell-Kernknoten ist, und die Angabe in einer Handover-Anforderungsnachricht enthalten ist, oder
der erste Netzwerkknoten (160) ein Ziel-Kernknoten ist, und der zweite Netzwerkknoten (160) ein Ziel-Funkzugangsknoten ist, und die Angabe in einer Handover-Anforderungsnachricht enthalten ist.

5. Erster Netzwerkknoten (160) nach Anspruch 4, wobei:
die erste RAT eine Quell-RAT ist, und
der zweite RAT eine Ziel-RAT ist.

6. Erster Netzwerkknoten (160) nach Anspruch 4, wobei die Verarbeitungsschaltungsanordnung (170) zum Ausführen der Anweisungen konfiguriert ist, um den ersten Netzwerkknoten (160) zu veranlassen zum:
Empfangen eines Messberichts von der drahtlosen Vorrichtung (110), die unter Verwendung der ersten RAT funktioniert; und
Initiieren des SRVCC-Handover an die zweite RAT basierend auf dem Messbericht.

7. Verfahren (1200) durch einen ersten Netzwerkknoten (160), umfassend:
Empfangen während eines Einzelfunk-Sprachverbindungskontinuitäts-,SRVCC-,Handover einer Kommunikationssitzung einer drahtlosen Vorrichtung (110) von einer ersten Funkzugangstechnologie, RAT, an eine zweite RAT einer Angabe, dass die drahtlose Vorrichtung (110) einen SRVCC-Ursprung der ersten RAT hat, von einem zweiten Netzwerkknoten (160), wobei die erste RAT NR ist, und die zweite RAT 3G ist, und wobei:
der erste Netzwerkknoten (160) ein Quell-Kernknoten ist, und der zweite Netzwerkknoten (160) ein Quell-Funkzugangsknoten ist, und die Angabe in einer Handover-Anforderungsnachricht enthalten ist, oder
der erste Netzwerkknoten (160) ein Ziel-Funkzugangsnetzwerkknoten ist, und der zweite Netzwerkknoten (160) einen Ziel-Kernknoten ist, und die Angabe in einer Handover-Anforderungsnachricht enthalten ist.

8. Verfahren (1200) nach Anspruch 7, ferner umfassend:
Weiterleiten der Angabe an einen Ziel-Kernknoten, falls der erste Netzwerkknoten (160) ein Quell-Kernknoten ist und der zweite Netzwerkknoten (160) ein Quell-Funkzugangsknoten ist, und die Angabe in einer Handover-Anforderungsnachricht enthalten ist.

9. Verfahren (1200) nach Anspruch 7, wobei:
die erste RAT eine Quell-RAT ist, und
die zweite RAT eine Ziel-RAT ist.

10. Verfahren (1200) nach Anspruch 7, ferner umfassend:
Senden einer Verbindungsfreigabenachricht, die eine Angabe einer Rückkehr zur ersten RAT umfasst, an die drahtlose Vorrichtung (110).

11. Erster Netzwerkknoten (160), umfassend:
einen Speicher (180), der zum Speichern von Anweisungen ausgelegt ist;
eine Verarbeitungsschaltungsanordnung (170), die zum Ausführen der Anweisungen ausgelegt ist, um den ersten Netzwerkknoten (160) zu veranlassen zum:
Empfangen während eines Einzelfunk-Sprachverbindungskontinuitäts-,SRVCC-,Handover einer Kommunikationssitzung einer drahtlosen Vorrichtung (110) von einer ersten Funkzugangstechnologie, RAT, an eine zweite RAT einer Angabe, dass die drahtlose Vorrichtung (110) einen SRVCC-Ursprung der ersten RAT hat, von einem zweiten Netzwerkknoten (160), wobei die erste RAT NR ist, und die zweite RAT 3G ist, und wobei:
der erste Netzwerkknoten (160) ein Quell-Kernknoten ist, und der zweite Netzwerkknoten (160) ein Quell-Funkzugangsknoten ist, und die Angabe in einer Handover-Anforderungsnachricht enthalten ist, oder
der erste Netzwerkknoten (160) ein Ziel-Funkzugangsnetzwerkknoten ist, und der zweite Netzwerkknoten (160) einen Ziel-Kernknoten ist, und die Angabe in einer Handover-Anforderungsnachricht enthalten ist.

12. Erster Netzwerkknoten (160) nach Anspruch 11, ferner umfassend:
Weiterleiten der Angabe an einen Ziel-Kernknoten, falls der erste Netzwerkknoten (160) ein Quell-Kernknoten ist und der zweite Netzwerkknoten (160) ein Quell-Funkzugangsknoten ist, und die Angabe in einer Handover-Anforderungsnachricht enthalten ist.

13. Erster Netzwerkknoten (160) nach Anspruch 11, wobei:
die erste RAT eine Quell-RAT ist, und
der zweite RAT eine Ziel-RAT ist.

14. Erster Netzwerkknoten (160) nach Anspruch 11, wobei die Verarbeitungsschaltungsanordnung (170) zum Ausführen der Anweisungen ausgelegt ist, um den ersten Netzwerkknoten (160) zu veranlassen zum:
Senden einer Verbindungsfreigabenachricht, die eine Angabe einer Rückkehr zur ersten RAT umfasst, an die drahtlose Vorrichtung (110).

## Revendications

1. Procédé (1000) par un premier nœud de réseau (160) comprenant :
au cours d'un transfert intercellulaire de continuité d'appel vocal radio unique, SRVCC, d'une session de communication d'un dispositif sans fil (110) depuis une première technologie d'accès radio, RAT, à une deuxième RAT, la transmission, à un deuxième nœud de réseau (160), d'une indication que le dispositif sans fil (110) a une origine SRVCC de la première RAT, dans lequel la première RAT est NR et la deuxième RAT est 3G, et dans lequel :
le premier nœud de réseau (160) est un nœud d'accès radio source et le deuxième nœud de réseau (160) est un nœud central source, et l'indication est incluse dans un message de demande de transfert intercellulaire, ou
le premier nœud de réseau (160) est un nœud central cible et le deuxième nœud de réseau (160) est un nœud d'accès radio cible, et l'indication est incluse dans un message de demande de transfert intercellulaire.

2. Procédé (1000) selon la revendication 1, dans lequel :
la première RAT est une RAT source, et
la deuxième RAT est une RAT cible.

3. Procédé (1000) selon la revendication 1, comprenant en outre
la réception d'un rapport de mesure depuis le dispositif sans fil (110) fonctionnant en utilisant la première RAT ; et
sur la base du rapport de mesure, l'initiation du transfert intercellulaire SRVCC à la deuxième RAT.

4. Premier nœud de réseau (160) comprenant :
une mémoire (180) utilisable pour stocker des instructions ; et
une circuiterie de traitement (170) utilisable pour exécuter les instructions pour amener le premier nœud de réseau (160) à :
au cours d'un transfert intercellulaire de continuité d'appel vocal radio unique, SRVCC, d'une session de communication d'un dispositif sans fil (110) depuis une première technologie d'accès radio, RAT, à une deuxième RAT, transmettre, à un deuxième nœud de réseau (160), une indication que le dispositif sans fil (110) a une origine SRVCC de la première RAT, dans lequel la première RAT est NR et la deuxième RAT est 3G, et dans lequel :
le premier nœud de réseau (160) est un nœud d'accès radio source et le deuxième nœud de réseau (160) est un nœud central source, et l'indication est incluse dans un message de demande de transfert intercellulaire,
ou
le premier nœud de réseau (160) est un nœud central cible et le deuxième nœud de réseau (160) est un nœud d'accès radio cible, et l'indication est incluse dans un message de demande de transfert intercellulaire.

5. Premier nœud de réseau (160) selon la revendication 4, dans lequel :
la première RAT est une RAT source, et
la deuxième RAT est une RAT cible.

6. Premier nœud de réseau (160) selon la revendication 4, dans lequel la circuiterie de traitement (170) est utilisable pour exécuter les instructions pour amener le premier nœud de réseau (160) à :
recevoir un rapport de mesure depuis le dispositif sans fil (110) fonctionnant en utilisant la première RAT ; et
sur la base du rapport de mesure, initier le transfert intercellulaire SRVCC à la deuxième RAT.

7. Procédé (1200) par le premier nœud de réseau (160) comprenant :
au cours d'un transfert intercellulaire de continuité d'appel vocal radio unique, SRVCC, d'une session de communication d'un dispositif sans fil (110) depuis une première technologie d'accès radio, RAT, à une deuxième RAT, la réception, depuis un deuxième nœud de réseau (160), d'une indication que le dispositif sans fil (110) a une origine SRVCC de la première RAT, dans lequel la première RAT est NR et la deuxième RAT est 3G, et dans lequel :
le premier nœud de réseau (160) est un nœud central source et le deuxième nœud de réseau (160) est un nœud d'accès radio source, et l'indication est incluse dans un message de demande de transfert intercellulaire,
ou
le premier nœud de réseau (160) est un nœud d'accès radio cible et le deuxième nœud de réseau (160) est un nœud central cible, et l'indication est incluse dans un message de demande de transfert intercellulaire.

8. Procédé (1200) selon la revendication 7, comprenant en outre :
l'acheminement de l'indication jusqu'à un nœud central cible, si le premier nœud de réseau (160) est un nœud central source et le deuxième nœud de réseau (160) est un nœud d'accès radio source, et l'indication est incluse dans un message de demande de transfert intercellulaire.

9. Procédé (1200) selon la revendication 7, dans lequel :
la première RAT est une RAT source, et
la deuxième RAT est une RAT cible.

10. Procédé (1200) selon la revendication 7, comprenant en outre
la transmission, au dispositif sans fil (110), d'un message de libération de connexion comprenant une indication de retourner à la première RAT.

11. Premier nœud de réseau (160) comprenant :
une mémoire (180) utilisable pour stocker des instructions ; et
une circuiterie de traitement (170) utilisable pour exécuter les instructions pour amener le premier nœud de réseau (160) à :
au cours d'un transfert intercellulaire de continuité d'appel vocal radio unique, SRVCC, d'une session de communication d'un dispositif sans fil (110) depuis une première technologie d'accès radio, RAT, à une deuxième RAT, recevoir, depuis un deuxième nœud de réseau (160), une indication que le dispositif sans fil (110) a une origine SRVCC de la première RAT, dans lequel la première RAT est NR et la deuxième RAT est 3G, et dans lequel :
le premier nœud de réseau (160) est un nœud central source et le deuxième nœud de réseau (160) est un nœud d'accès radio source, et l'indication est incluse dans un message de demande de transfert intercellulaire,
ou
le premier nœud de réseau (160) est un nœud d'accès radio cible et le deuxième nœud de réseau (160) est un nœud central cible, et l'indication est incluse dans un message de demande de transfert intercellulaire.

12. Premier nœud de réseau (160) selon la revendication 11, comprenant en outre :
l'acheminement de l'indication jusqu'à un nœud central cible, si le premier nœud de réseau (160) est un nœud central source et le deuxième nœud de réseau (160) est un nœud d'accès radio source, et l'indication est incluse dans un message de demande de transfert intercellulaire.

13. Premier nœud de réseau (160) selon la revendication 11, dans lequel :
la première RAT est une RAT source, et
la deuxième RAT est une RAT cible.

14. Premier nœud de réseau (160) selon la revendication 11, dans lequel la circuiterie de traitement (170) est utilisable pour exécuter les instructions pour amener le premier nœud de réseau (160) à :
transmettre, au dispositif sans fil (110), un message de libération de connexion comprenant une indication de retourner à la première RAT.
